# EUROPEAN PATENT APPLICATION

(11) **EP 4 012 399 A1**
(43) Date of publication of application: **15.06.2022**
(21) Application number: 21211512.5
(22) Date of filing: 30.11.2021
(51) Int. Cl.: G01N 27/904

(54) **A PROBE AND A SYSTEM FOR THE NON-DESTRUCTIVE INSPECTION OF A WELDING**

(30) Priority: 10.12.2020 PT 2020116927
(71) Applicant: Introsys Integration for Robotics Systems, Integração de Sistemas Robóticos, S.A., 2950-805 Quinta do Anjo (PT)
(72) Inventor: GOMES DOS SANTOS, Telmo Jorge, 2829-516 Caparica (PT); ARAÚJO MACHADO, Miguel, 2829-516 Caparica (PT); BENTES MOITA FLORES, Nuno Manuel, 2625-610 Azeitão (PT); DA SILVA GUEDES MAGNO, Edgar, 6000-187 Castelo Branco (PT); BENTO RAINHO CALDEIRA, Maria Raquel, Castelo Branco (PT); MARTINS DEUSDADO, Pedro Miguel, 2820-669 Charneca da Caparica (PT); COELHO DEPPEN, Daniel Christopher, 1800-194 Almada (PT); FRANCISCO GONÇALVES, José João, 2930-103 Barreiro (PT); SERRA HENRIQUES, David Filipe, 2855-217 Corroios (PT); DAMAS DA SILVA, Luis Miguel, 2910-867 Setúbal (PT); DA FONSECA CUNHA, Tiago Miguel, 825-453 Costa de Caparica (PT)
(74) Representative: do Nascimento Gomes, Rui

(57) **Abstract**

The present invention is enclosed in the area of the inspection of welding between two parts, for instance for the inspection of welding in the automotive industry, in which parts such as roofs and side panels are welded together. Specifically, the present invention provides a non-destructive inspection of a welding (100). The present invention provides a miniaturized and robust probe (10) which is suitable for the determination of a difference between a first impedance determined through the eddy currents induced in the welding (100) by a first inductor (11) and a second impedance determined through eddy currents induced in a reference material (13) by a second inductor (12) is able to be determined. Such difference allows to determine whether the first impedance is in correspondence with the second impedance, i.e., if the inspected part corresponds to the reference material (13), and enables to determine whether the compliance or level of compliance of the inspected part / welding (100).

## Description

### FIELD OF THE INVENTION

The present invention is enclosed in the area of the inspection of welding between two parts, for instance for the inspection of welding in the automotive industry, in which parts such as roofs and side panels are welded together. Specifically, the present invention provides a non-destructive inspection of a welding.

### PRIOR ART

In the automotive industry, ensuring the safety of the driver and passengers of the vehicle is a top priority for any manufacturer. The manufacturing and assembly processes of individual parts and components of a motor vehicle must comply with strict quality criteria. However, it is not always possible to assess immediately - in a systematic and non-intrusive way - the result of the processes or the condition of the machinery, eventually resulting in irreparable defects that can jeopardize the structural capacity of the vehicle. These defects, when detected late, either through destructive sampling tests or in integrity tests carried out in the final stage of the manufacturing process, in most cases imply the total loss of suspicious vehicles and, consequently, large expenses for the manufacturer.

Currently, quality inspection techniques in the manufacture and assembly of car components can be grouped into two main areas: (i) Destructive Testing (DT); or (ii) Non-Destructive Testing (NDT). Both can be considered complementary, depending on the characteristics of the material to be analysed.

DT inevitably implies the deformation or destruction of the analysed part. This happens so that it is possible to measure the physical and chemical properties and characteristics of the structure, joint, or the material itself. NDT prevents the loss of material, allowing to observe the quality of parts that, even after the tests, maintain their original properties, and can continue to integrate the final application. When planning a production process for a new application, it is easy to see the advantage of using both methods: (i) DT in an initial phase of product conceptualization and prototyping, testing the suitability of the material and / or process used for the typical and extreme operating conditions of the application; and (ii) NDT is applied during the production process, to all parts, ensuring that production continues to meet the initial criteria, even if this implies a slightly higher analysis tolerance. However, this scenario cannot always be applied and, as there exist no known NDT solutions to analyse certain relevant characteristics, thus being necessary to maintain DT, even during the production phase and at the expense of high expenditure of material and human resources.

Currently, several NDT techniques are used to inspect welds for defects, and all have advantages and disadvantages: inspection by magnetic particles (MP) is straightforward and relatively easy to use, but not good for welds with coatings or wet surfaces (surfaces must be dried first) and is only applicable to materials with relative magnetic permeability greater than 1 (ferromagnetic materials); penetrating liquid inspection (LI) is good for cracks with a surface opening, but also requires a dry surface and depends of the operator; ultrasound testing (UT) is effective in detecting defects in volume (inside), but the inspection surface must be regular to allow effective coupling and the application of a coupled liquid is still necessary to allow the transmission of sound to the plate, which makes automation of the process extremely difficult and raises problems of surface contamination before painting; the X-ray testing (RT) is indicated for defects in volume, but consists of ionising radiation, requiring additional safety considerations, not necessary for other techniques; induced currents (IC) tests allow the identification of surface or sub-surface defects in electrically conductive materials, but solutions known in the art based on IC are not adapted for an industrial and automated application.

Considering the specific case of laser brazing, it is a process that uses the radiation energy of a laser beam to fuse a wire-shaped addition material provided between the base materials to be brazed. This can improve rigidity and processing time while maintaining the appearance and mechanical properties of the base materials. Applications have been increasing in the automotive industry and others as a cutting-edge connection technology to replace resistance spot welding which affects the appearance of base materials. When laser brazing is applied to the junction of car roofs, side panels and boot covers, seam tracking control is essential for accurate and rapid detection of defects in the complicated curved surfaces of bodies. There exist highspeed laser scanners in the art which use a laser beam that allows to detect the shape, position, distance, height and height difference of the place where the addition material will be placed directing to the place, thereby allowing control of the robot in real time. These capabilities have great advantages for improving connection accuracy and processing time through the introduction of laser brazing.

After brazing, the presence of discontinuities in the joint is determined, which can mean lack of addition material, porosity, glue, reduction in the height of the cord or cracks. The severity of the discontinuities found must be interpreted according to the criteria established by the applicable guidelines or by the design requirements. Cracks are not allowed in industrial processes, but isolated voids can be tolerated if they are not opened to the surface. The quantity and distribution of accepted internal voids and the method for determining them, usually by radiography or ultrasound testing, is established according to the function and importance of the application.

The most important function of brazing inspection is not to reject defective parts, but to keep all brazing steps within the established limits, during the development phase, as necessary to meet the requirements of a successful operation.

Inspection of finished joints can be the final step in the brazing process, but inspection procedures must be incorporated into the planning phase. Its methodology will depend on the application, service and final customer requirements, in addition to the regulatory guidelines and standards. Acceptance criteria for any type of discontinuity must be defined, with considerations on form, orientation, location (surface or subsurface) and relationship with other discontinuities. Indicate the acceptance limits in terms of minimum requirements.

A vehicle is subject to several types of tests, to check its compliance with legal and established criteria. Although all these processes contribute to the quality and safety of the vehicle, the bodywork area is the most critical. Any failure or defect not detected in this phase will have serious repercussions in the following phases, which can range from aggravated aesthetic problems after painting the material, to the compromising of the structural rigidity of the vehicle, through geometric changes, greater prominence to noise or infiltrations, among others.

According to the different sub-processes carried out in the bodywork area, it is necessary to find solutions to identify defects, in particular the connection through laser brazing of the vehicle's side panels with the roof. Currently, the joining processes (gluing and welding) of structural parts, being critical to the vehicle's structural strength and safety, are those that have caused the most interest in technology suppliers, as well as those that present greater technological challenges.

This particular case, of the joining through welding of parts, such as through laser brazing of the vehicle's side panels with the roof, brings together a series of constraints that make both the joining process and the verification of the quality of the joint a very complex task:
- it is the joint that has the greatest absolute length, in relation to any other glued or welded joint;
- despite the length of the joint, it must be quite robust because, together with the central pillar to the vehicle, when existing, it must be able to withstand external impacts in case of overturning, side impact or falling objects on the roof;
- it cannot present any kind of irregularities since the faces are exposed to the outside and, after painting, it would be visually unattractive;
- due to the previous points, this connection cannot be made either by means of gluing or by spot welding, the possible solution being that of welding through laser brazing;
- due to the radiation emitted by the laser, the brazing process must be carried out in a closed chamber, making monitoring and supervision difficult;
- after brazing, it is not possible to visually identify internal defects in the cord, nor the presence of defects such as lack of diffusion and connection with base materials;
- due to the complex geometry of the joint, sharp angles, edges and reduced space, it is not possible to use the existing inspection equipment or probes, capable of making measurements inside the bead.

The processes that allow the inspection of vehicles, in these conditions, without material destruction, are expensive and there may be situations in which the size of the defect or resolution of the automatic system makes detection impossible. In view of the possibility of this type of defects, instead of an automatic inspection, a manual inspection is usually carried out which turns out to be more time consuming and complex, having to be carried out by experienced professionals. As a rule, all vehicles are visually inspected for visible defects, however, a more detailed inspection can only be done by means of significant sampling and sometimes you may need the vehicles to be taken off the line and reintroduced again, increasing also the logistical and management complexity of these processes.

In cases such as the laser brazing process, where there is typically a zone of bimetallic interfaces, most of the possible defects to be identified are not visible from the outside. The morphology of defects that may jeopardize the integrity of the cord resulting from the process includes: the presence of glue, porosity, internal cracks or narrowing of the cord. Another defect that cannot be identified visually is the lack of cord height. Typically, a well-welded cord has a minimum height of more than 70% of the thickness of the least thick plate involved in the connection. Below this value, for example, about 0.5 mm, it is considered that it does not meet the necessary structural strength.

The porosities may have dimensions greater than 0.2 mm, with a superficial or sub-superficial location, which is typically considered unacceptable for the brazed joint. In this sense, porosities with dimensions greater than about 0.2mm must be detected by the inspection system, as they are considered defects; The brazing material has specifications that depend on the manufacturer's internal standard, and is typically a good material that conducts electricity, but not ferromagnetic; finally, the joint is edged, with a complex and difficult to access geometry. All of these inspection conditions mean that the use of existing inspection equipment cannot be considered, thus leading to the need for destructive tests which, as the name indicates, imply the destruction of the material under analysis.

Due to the lack of commercially available inspection equipment, the solution to analyse the brazing quality is to perform destructive tests. The process consists of taking a significant sample of vehicles off the production line and taking them to a dedicated test area. If defects are detected, it is still necessary to ascertain their cause. As the sampling is very small, it is not possible to directly correlate the defects identified with the cause, which requires huge added costs, not only to understand the reason for the failure, but also which vehicles were produced that may have been affected. All these adversities can be easily avoided, if it were possible to analyse all vehicles by non-destructive methods, obtaining conclusive results in a timely manner that allow the identification and mitigation of the problem that introduces the unforeseen presence of defects in the process. Apart from financial issues, there are also environmental problems caused by the waste of resources.

The present solution to innovatively overcomes the issues known in the art, providing a non-destructive testing solution which is suitable for industrial applications, for instance in the automotive area. Furthermore, the present solution is able to address the inspection of any type of welding, including a laser brazed welding.

### SUMMARY OF THE INVENTION

It is therefore an object of the present invention a probe for the non-destructive inspection of a welding comprising a first inductor, a second inductor and a connecting circuit which connects the first inductor and the second inductor, wherein:
- the first inductor is arranged such that it is suitable to be in contact with a welding to be inspected and is configured to be crossed by a time varying current, preferably an alternating current, which induces eddy currents in the welding,
- the second inductor is arranged such that it is in contact with a reference material for the welding to be inspected and is configured to be crossed by a time varying current, preferably an alternating current which induces eddy currents in the reference material, and
- the connecting circuit is configured to connect the first inductor and the second inductor such that, when
   - the probe tip of the first inductor is in contact with a welding and
   - eddy currents are generated in the welding through a time varying current, preferably an alternating current, crossing the first inductor and eddy currents are generated in the reference material through a same electric current crossing the second inductor,
a difference between a first impedance determined through the eddy currents induced in the welding by the first inductor and a second impedance determined through eddy currents induced in the reference material by the second inductor is able to be determined.

The present invention therefore provides a miniaturized and robust probe which is suitable for the determination of a difference between a first impedance determined through the eddy currents induced in the welding by the first inductor and a second impedance determined through eddy currents induced in the reference material by the second inductor is able to be determined. Such difference allows to determine whether the first impedance is in correspondence with the second impedance, i.e., if the inspected part corresponds to the reference material, and thereby enables to determine whether the compliance or level of compliance of the inspected part / welding. The probe of the present invention thereby enables an immediate, systematic and material-free assessment of the quality of any welding, such as a welding obtained by laser brazing on an automotive production line. If a difference above a predefined threshold is determined, it means that a defect exists in the welding. In addition, the probe of the present invention allows to detect internal (sub-surface) defects and surface defects without impairing the work flow and without interrupting the production line. The present invention thus allows the total inspection of the welding, identifying defects such as the presence of missing bonding and porosities.

It is also part of the present invention a system for the non-destructive inspection of a welding comprising the probe of the present invention, in any of its embodiments, and means for generating a time varying current, preferably an alternating current to cross the first and second inductors.

It is also part of the present invention the use of the probe of the present invention, in any of its embodiments, or of the system of the present invention, in any of its embodiments, wherein the welding is composed of a welding composition, and the reference material for the welding to be inspected is made of the same welding composition.

The probe of the present invention may be used in several areas, such as automotive, metalworking industries, aeronautics, naval or rail, among other areas.

### DESCRIPTION OF FIGURES

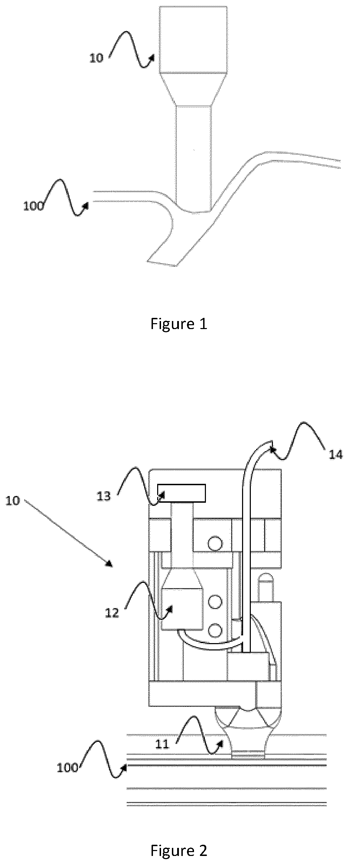

Figure 1 - representation of an embodiment of the probe (10) of the present invention, being provided on a welding under inspection (100).
Figure 2 - detailed representation of an embodiment of the probe (10) of the present invention, in a front view and on a welding under inspection (100), the probe comprising a first inductor (11) and a second inductor (12), a probe tip of the second inductor being in contact with a reference material (13), and a connecting circuit (14) connecting the first and second inductors (11, 12).

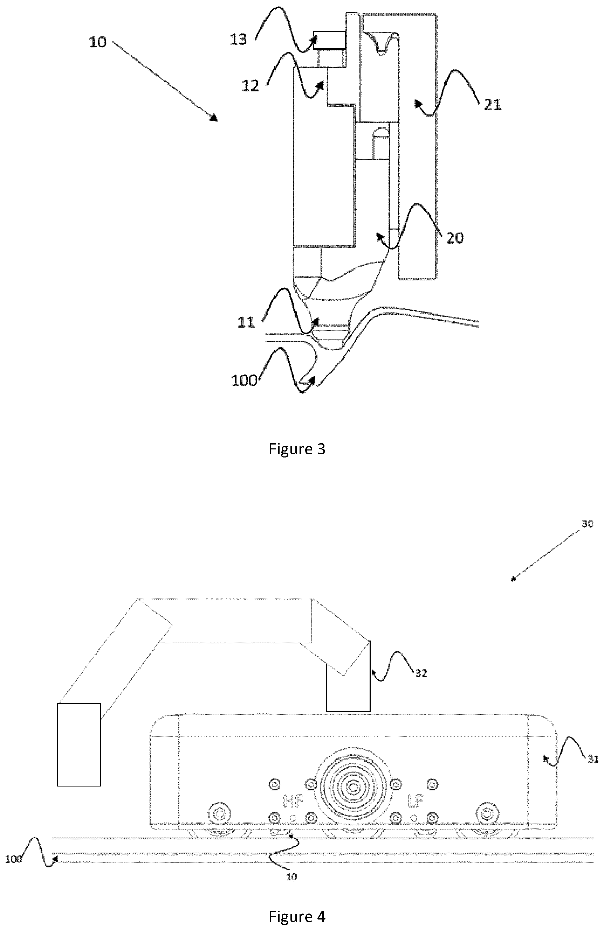

Figure 3 - detailed representation of an embodiment of the probe (10) of Figure 2, in a side view and on a welding under inspection (100), the probe further comprising a housing (20) and an elastic joint (21), the elastic joint providing a tuning distance and decoupling the adjustment to the welding under inspection (100) from an adjustment of further means for moving the probe (10) (not represented).
Figure 4 - representation an embodiment of the system (30) of the present invention, the system comprising a probe (10) and a chassis (31) which in turn is connected to a robotic arm (32) - which consist of the means for moving - and which provide for the movement of the probe (10) along the welding under inspection.

### DETAILED DESCRIPTION

The more general configurations of the present invention are described in the Summary of the invention. Such configurations are detailed below in accordance with other advantageous and/or preferred embodiments of implementation of the present invention.

In an inventive aspect, the connecting circuit (14) connects the first inductor and the second inductor (12) in a differential bridge circuit. Such provides for an enhanced configuration of the circuit, which allows to automatically determine a difference between the determined first impedance and second impedance. Advantageously, the differential bridge circuit is an H bridge circuit. This allows to increase the gain and obtain a greater sensitivity in the measurement, with better signal-to-noise ratio (SNR).

In an embodiment, the reference material (13) consists of a similar material to be inspected, such as a non-ferromagnetic material, comprising one or more metals. Preferably, the non-ferromagnetic material specifically comprises a copper, aluminium, titanium or magnesium alloy.

In an embodiment, the welding is a laser brazed welding, thus resulting that the reference material (13) corresponds to a material of a laser brazed welding without defects.

In another inventive aspect of the probe (10) of the present invention, it further comprises a housing (20), an elastic joint (21) and a connection element, wherein:
- at least the first inductor (11), preferably the first and second inductors (11, 12) and the connecting circuit (14), are coupled in a solidary form to the housing (20), and
- the elastic joint (21) is arranged in parallel with the first inductor (11) and connects the housing (20) and the connection element such that, by deformation of the elastic joint (21) between a fully deformed position and a fully released position, the distance between the fully deformed position and the fully released position define a tuning distance, the position of the housing (20) being shiftable with regard to the connection element in the tuning distance when the elastic joint (21) is deformed of the elastic joint (21) between a fully deformed position and a fully released position.

Such allows to decouple the adjustment in height of the probe (10) from the overall movement of the probe (10), for instance through means for moving the probe (10), which in an embodiment may consist of a robotic arm (32). Considering such case of a robotic arm (32), the arm may move the probe (10) as a whole, positioning it such that it touches a surface to be inspected. Yet, in order to decouple such positioning from a correct position in height of the probe (10) - meaning to touch the surface without damaging it - the elastic joint (21) and connection element of the present invention are provided as described above, thus allowing that the probe (10) and thus the probe tip are adjusted in a course which corresponds to said tuning distance. Advantageously, the elastic joint (21) is formed by a linear bearing with an elastic element, the elastic element preferably consisting of a spring.

In another aspect of the probe (10) of the present invention, each of the first and second inductors (11, 12) comprise a core, a coil provided around the core and an electromagnetic shield, the core of each of the first and second inductors (11, 12) being a ferrite core.

In yet another advantageous aspect, the probe (10) comprises a housing (20), the housing (20) being so arranged that the probe tip of the first inductor (11), the probe tip of the second inductor (12) and the reference material (13) are externally accessible. Such allows simultaneously for an easiness of contact for the probe tip of the first inductor (11) and also for the replacement of the reference material (13), which is in contact with the second inductor (12).

In an embodiment, each probe (10) has an external diameter of less than 2 mm, including an electromagnetic shielding.

In another embodiment, each probe (10) is able to operate at frequencies between 2 kHz and 12 MHz.

In an embodiment, each probe (10) is able to operate at an RMS voltage of approximately 1 to 12 V and an electric current intensity in the order of mA.

Subsequently, several embodiments of the system (30) of the present invention are detailed.

Advantageously, the means for generating a time varying current, preferably an alternating current are configured to generate a high-frequency time varying current, preferably alternating current and a low-frequency time varying current, preferably alternating current to cross said first and second inductors (11, 12), wherein the high-frequency time varying current, preferably alternating current has a frequency which is higher than the low-frequency time varying current, preferably alternating current. The high-frequency signal allows to inspect at lower depths, and the low-frequency allows to inspect at a higher depth. This solution increases the sensitivity of the probes (10) to target defects, both at the surface and at the root of the welding (100). Such frequencies are between 2 to 100 kHz for low-frequency and 3 to 12 MHz for high-frequency.

In a first embodiment, the system (30) comprises a single probe (10), through probe (10) being injected high and low-frequency signals, as above described.

In a second embodiment, the system (30) comprises two probes (10), wherein the means for generating a time varying current, preferably an alternating current are configured to generate the high-frequency time varying current, preferably alternating current to cross the first and second inductors (11, 12) of a first probe (10) and to generate the low-frequency time varying current, preferably alternating current to cross the first and second inductors (11, 12) of a second probe (10).

In another aspect, the system (30) further comprises means for analysing impedance, the means for analysing impedance being configured to obtain the determined impedance.

In a more detailed inventive aspect, the means for analysing impedance are further configured for i) providing the determined impedance the form of a vector and ii) implementing a rotation in such determined impedance in the form of a vector, such that a signal-to-noise ratio (SNR) is maximized, wherein the determined impedance in the form of a vector is preferably in polar coordinates.

In an inventive aspect, the means for analysing impedance are further configured to obtain a plurality of first impedance values which define e set of first impedance values and, for such set, determine absolute and/or relative maximum or minimum values, the absolute and/or relative maximum or minimum values being defined above a predefined threshold. Such allows to isolate the values which potentially represent a defect.

In an advantageous aspect, the system (30) further comprises means for moving the probe (10), said means for moving the probe (10) being configured to displace the probe (10) at least along one direction. Such allows to move the probe (10) and thereby determine a first impedance in different locations.

In another advantageous aspect, the means for analysing impedance are configured to obtain the plurality of first impedance values in correspondence to a plurality of locations, the means for moving the probe (10) displacing the probe (10) along said one direction such that the plurality of first impedance values in correspondence to a plurality of locations is obtained. Such configuration allows to inspect the welding (100) in a plurality of locations, which may refer to a same piece, thereby allowing to obtain information on a plurality of test points which represent the whole piece, and thus provide a determination of the presence or absence of defects in the whole piece. The piece may consist, for example, of the welding (100) between the roof and a side panel of a vehicle.

In an embodiment, the means for moving the probe (10) comprise a robotic arm (32) able to move the probe (10) along at least two directions, wherein at least one of such directions substantially corresponds to a movement along a piece to be inspected. Such allows to move the probe (10) vertically and horizontally, meaning that it is able to position the probe (10) vertically and then move it along a direction which allows to cover the referred plurality of test points, and thereby test an oblong piece.

In a first embodiment, the probe (10) may be directly coupled to the robotic arm (32).

In a second embodiment, the means for moving the probe (10) further comprise a chassis (31) and at least three wheels arranged to be supported in a plane, the probe (10) and the at least three wheels being provided in the chassis (31) and the chassis (31) being coupled to the robotic arm (32) such that the robotic arm (32) is able to move the chassis (31) and thereby the probe (10) along a surface in which the wheels are supported. Such configuration is particularly advantageous, as it combines simplicity of construction with a compatibility of a standardized element as a robotic arm (32).

In a third embodiment, the means for moving the probe (10) comprise a chassis (31), at least two autonomous wheels comprising step motors arranged along said direction of the movement along a piece, and at least two magnets associated with the autonomous wheels, wherein the probe (10), the wheels and the magnets are provided in the chassis (31) such that the wheels are able to be magnetically coupled to a metallic surface by means of the magnets and move the chassis (31) and thereby the probe (10) by means of the step motors. Such allows a self-sufficiency of the system (30), which does not resort to an element such as a robotic arm (32).

In an advantageous embodiment, the system (30) comprises a plurality of probes (10), thereby being able to simultaneously test several points. Advantageously, the probes (10) are aligned along said direction of the movement along a piece.

In an aspect of the use of the present invention, wherein the welding (100) is a laser brazed welding.

In another aspect, the welding (100) is provided between two parts of a vehicle. In yet another aspect, the two parts of the vehicle consist of a side panel and a roof.

Additional embodiments of the probe (10) of the present invention are subsequently presented.

In an embodiment, each probe (10) is preferably connected by a cable with three wires to the means for analysing impedance, two of the wires providing injection of a time varying current, preferably an alternating electric current, for the excitation of the coils, and a third ground wire. Through an analogue interface of the means for analysing impedance, it is possible to extract the obtained data. To convert analogue data to digital, a data acquisition converter (DAC) can be used. A graph may be constructed on a computer with the evolution of the impedance over time, which can be related to the position of the probe (10) in relation to the welding (100), where the results may be analysed.

In an embodiment, the system (30) may be further configured such that it determines whether a welding under inspection (100) is compliant or not-compliant. Such determination may be based through predefined threshold values and/or associated acceptable tolerances, compared with a determined first impedance and/or a plurality of first impedances, which relate to a same piece under inspection.

Such determination may be communicated by receiving command and control signals and emitting status signals (OK - compliant / NOK - not-compliant).

Through a dedicated graphic interface, it is possible to configure and parameterize the system (30), including the definition of threshold values and acceptable tolerances.

A local database may keep a record of the results of carried-out inspections, as well as other performance indicators (such as cycle time and energy consumed), which can be exported in a format compatible with a factory's information system (FIS).

This register may be used to train a neuronal network that is able to identify patterns and changes in the signal that reveal signs of wear on the equipment.

As will be clear to one skilled in the art, the present invention should not be limited to the embodiments described herein, and a number of changes are possible which remain within the scope of the present invention.

Of course, the preferred embodiments shown above are combinable, in the different possible forms, being herein avoided the repetition all such combinations.

## Claims

1. A probe (10) for the non-destructive inspection of a welding (100) **characterised in that** it comprises a first inductor (11), a second inductor (12) and a connecting circuit (14) which connects the first inductor (11) and the second inductor (12), wherein:
- the first inductor (11) is arranged such that it is suitable to be in contact with a welding (100) to be inspected and is configured to be crossed by a time varying current, preferably an alternating current which induces eddy currents in the welding (100),
- the second inductor (12) is arranged such that it is in contact with a reference material (13) for the welding (100) to be inspected and is configured to be crossed by a time varying current, preferably an alternating current which induces eddy currents in the reference material (13), and
- the connecting circuit (14) is configured to connect the first inductor (11) and the second inductor (12) such that, when
- the probe tip of the first inductor (11) is in contact with a welding (100) and
- eddy currents are generated in the welding (100) through a time varying current, preferably an alternating current crossing the first inductor (11) and eddy currents are generated in the reference material (13) through a same time varying current, preferably alternating current, crossing the second inductor (12),
a difference between a first impedance determined through the eddy currents induced in the welding (100) by the first inductor (11) and a second impedance determined through eddy currents induced in the reference material (13) by the second inductor (12) is able to be determined.

2. A probe (10) according to the previous claim wherein the connecting circuit (14) connects the first inductor (11) and the second inductor (12) in a differential bridge circuit
and, optionally, the differential bridge circuit is an H bridge circuit.

3. A probe (10) according to any of the preceding claims wherein the reference material (13) consists of a non-ferromagnetic material, comprising one or more metals
and, optionally, the non-ferromagnetic material specifically comprises a copper, aluminium, titanium or magnesium alloys.

4. A probe (10) according to any of the preceding claims wherein the welding (100) is a laser brazed welding (100).

5. A probe (10) according to any of the preceding claims wherein it further comprises a housing (20), an elastic joint (21) and a connection element, wherein:
- at least the first inductor (11), preferably the first and second inductors (11, 12) and the connecting circuit (14), are coupled in a solidary form to the housing (20), and
- the elastic joint (21) is arranged in parallel with the first inductor (11) and connects the housing (20) and the connection element such that, by deformation of the elastic joint (21) between a fully deformed position and a fully released position, the distance between the fully deformed position and the fully released position define a tuning distance, the position of the housing (20) being shiftable with regard to the connection element in the tuning distance when the elastic joint (21) is deformed of the elastic joint (21) between a fully deformed position and a fully released position,
and, optionally, the elastic joint (21) is formed by a linear bearing with an elastic element, the elastic element preferably consisting of a spring.

6. A probe (10) according to any of the preceding claims wherein
- each of the first and second inductors (11, 12) comprise a core, a coil provided around the core and a shield, the core of each of the first and second inductors (11, 12) being a ferrite core, and/or
- it comprises a housing (20), the housing (20) being so arranged that the probe tip of the first inductor (11), the probe tip of the second inductor (12) and the reference material (13) are externally accessible.

7. A system (30) for the non-destructive inspection of a welding (100) comprising the probe (10) of any of the preceding claims and means for generating a time varying current, preferably an alternating current to cross the first and second inductors (11, 12).

8. A system (30) according to the previous claim wherein the means for generating a time varying current, preferably an alternating current are configured to generate a high-frequency alternating current and a low-frequency alternating current to cross said first and second inductors (11, 12), wherein the high-frequency alternating current has a frequency which is higher than the low-frequency alternating current and, optionally, the system (30) comprises:
- a single probe (10), or
- two probes (10), wherein the means for generating a time varying current, preferably an alternating current are configured to generate the high-frequency a time varying current, preferably alternating current to cross the first and second inductors (11, 12) of a first probe (10) and to generate the low-frequency a time varying current, preferably alternating current to cross the first and second inductors (11, 12) of a second probe (10).

9. A system (30) according to any of the claims 7-8 wherein it further comprises means for analysing impedance, the means for analysing impedance being configured to obtain the determined impedance and, optionally, the means for analysing impedance are further configured for i) providing the determined impedance the form of a vector and ii) implementing a rotation in such determined impedance in the form of a vector, such that a signal-to-noise ratio (SNR) is maximized, wherein the determined impedance in the form of a vector is preferably in polar coordinates and, optionally, the means for analysing impedance are further configured to obtain a plurality of first impedance values which define e set of first impedance values and, for such set, determine absolute and/or relative maximum or minimum values, the absolute and/or relative maximum or minimum values being defined above a predefined threshold.

10. A system (30) according to any of the claims 7-9 wherein it further comprises means for moving the probe (10), said means for moving the probe (10) being configured to displace the probe (10) at least along one direction.

11. A system (30) according to claims 9 and 10 wherein the means for analysing impedance are configured to obtain the plurality of first impedance values in correspondence to a plurality of locations, the means for moving the probe (10) displacing the probe (10) along said one direction such that the plurality of first impedance values in correspondence to a plurality of locations is obtained and, optionally, the means for moving the probe (10) comprise a robotic arm (32) able to move the probe (10) along at least two directions, wherein at least one of such directions substantially corresponds to a movement along a piece to be inspected and, optionally, the means for moving the probe (10) further comprise a chassis (31) and at least three wheels arranged to be supported in a plane, the probe (10) and the at least three wheels being provided in the chassis (31) and the chassis (31) being coupled to the robotic arm (32) such that the robotic arm (32) is able to move the chassis (31) and thereby the probe (10) along a surface in which the wheels are supported.

12. A system (30) according to the previous claim wherein the means for moving the probe (10) comprise a chassis (31), at least two autonomous wheels comprising step motors arranged along said direction, and at least two magnets associated with the autonomous wheels, wherein the probe (10), the wheels and the magnets are provided in the chassis (31) such that the wheels are able to be magnetically coupled to a metallic surface by means of the magnets and move the chassis (31) and thereby the probe (10) by means of the step motors.

13. A system (30) according to any of the claims 7-12 wherein it comprises a plurality of probes (10) of any of the claims 1-6 and, optionally, the probes (10) are aligned along said direction.

14. Use of the probe (10) of any of the claims 1-6 or of the system (30) of any of the claims 7-13 wherein the welding (100) is composed of a welding (100) composition, and the reference material (13) for the welding (100) to be inspected is made of the same welding (100) composition.

15. Use according to the previous claim wherein the welding (100) is:
- a laser brazed welding (100), and/or
- provided between two parts of a vehicle and, optionally, the two parts of the vehicle consist of a side panel and a roof.
